# EUROPEAN PATENT APPLICATION

(11) **EP 1 152 480 A2**
(43) Date of publication of application: **07.11.2001**
(21) Application number: 01301140.8
(22) Date of filing: 08.02.2001
(51) Int. Cl.: H01Q 1/24, H01Q 17/00

(54) **Electromagnetic wave attenuators for application in mobile phones**

(30) Priority: 19.04.2000 KR 2000020660
(71) Applicant: Nissi Telecom Co., Ltd., Seoul (KR); Son, Taeho, Asan-city, Chungcheongnam-do (KR)
(72) Inventor: Son, Taeho, Divn. I.T.Eng., Soonchunbyang Univ., Asian City, Chungcheongnam-do (KR)
(74) Representative: Stanley, David William

(57) **Abstract**

An electromagnetic wave attenuator 100 for a mobile communication terminal includes a corrugated structure conductor 110 having a plurality of ridges 111 between which slots are formed, and a highly dielectric material 120 having a relative dielectric constant of at least 50, filled in the slots.

## Description

The present invention relates to electromagnetic wave attenuators.

Since it is possible to transmit information via mobile communication terminals anywhere and any time, the use of mobile communication terminals is increasing, and more particularly, the use of a mobile phone which is a kind of mobile communication terminal, is rapidly increasing. Furthermore, the current development of international mobile telecommunications - 2000 (IMT-2000) will enable the use of mobile communication terminals to be more widespread.

Mobile phones, among mobile communication terminals, are classified into cellular phones having a transmitting frequency range of 824 -849MHz and personal communication service (PCS) phones having a transmitting frequency range of 1750 - 1780 MHz.

The frequency of cellular phones in the U.S.A. is the same as that of cellular phones used in Korea. However, in the case of PCS phones, a frequency range of 1850-1910MHz, which is about 1000MHz higher than that of PCS phones used in Korea, is used in the U.S.A. Furthermore, a transmitting frequency of 800-915MHz for the GMS system (Global System for Mobile communication) is used in Europe, where it occupies more than 60% of the mobile phone market. Also, cordless telephones for home use are classified into CT1 (City Telephone 1) having a frequency of 914MHz and CT1+ having a frequency of 885MHz. A helical antenna and 1/4 wavelength earth antenna, which is a wire antenna, are used as antennae for mobile phones.

When a mobile communication terminal such as a mobile phone is used, a signal amplified by a high frequency circuit in the mobile phone changes into an electromagnetic wave via an antenna. The electromagnetic wave may have harmful effects on the human body which is adjacent to the mobile phone, particularly, to brain tissue. That is, the strong electromagnetic wave can penetrate directly into the brain of the human body, interact with electrons and nuclei of atoms forming the brain tissue by the effects of polarization, and transform protein of the brain tissue. As a result, parts of the normal brain tissue become abnormal. Also, it is reported that strong electromagnetic waves, like poisonous chemical materials, can give rise to cancer.

Preferred embodiments of the present invention aim to provide an electromagnetic wave attenuator for a mobile communication terminal which is capable of attenuating a strong electromagnetic wave originating from the mobile communication terminal and minimizing damage due to the electromagnetic wave.

According to one aspect of the present invention, there is provided an electromagnetic wave attenuator for a mobile communication terminal, the attenuator comprising:
a corrugated structure conductor having a plurality of ridges between which slots are formed; and
a highly dielectric material having a relative dielectric constant of at least 50, disposed in the slots.

Preferably, the ratio of the width of the ridges to the width of the slots is less than 0.6.

Preferably, the corrugated structure conductor comprises at least one of silver (Ag), aluminum (Al), and copper (Cu).

Preferably, the highly dielectric material is a ceramic compound dielectric material.

The highly dielectric material may be SrTiO₃ having a relative dielectric constant in the range 270 to 290.

The the highly dielectric material may be 0.95SrTiO₃ + 0.05ZnTiO₃ having a relative dielectric constant in the range 240 to 260.

The invention extends to a mobile communication terminal provided with an electromagnetic wave attenuator according to any of the preceding aspects of the invention.

Preferably, the number of ridges is in the range 3 to 8 per wavelength of a centre frequency in air of the operating frequency range of the mobile communication terminal.

Preferably, the depth of the slots is one-quarter of the wavelength of a centre frequency in air of the operating frequency range of the mobile communication terminal.

One side of the corrugated structure conductor may be soldered to a conductor exposed on a printed circuit board of the terminal.

One side of the corrugated structure conductor may be secured at an internal side of a case of the terminal by adhesive.

The attenuator may be disposed within a case having a holder at one side of the case, by which the case is fixed to an antenna of the terminal.

Preferably, the attenuator is installed at a position of maximum SAR value.

For a better understanding of the invention, and to show how embodiments of the same may be carried into effect, reference will now be made, by way of example, to the accompanying diagrammatic drawings, in which:
Figure 1 is an internal sectional view of an electromagnetic wave attenuator for a mobile communication terminal, according to one example of the present invention;
Figure 2 is a perspective view in which an electromagnetic wave attenuator for a mobile communication terminal is attached to a printed circuit board (PCB) of a mobile phone;
Figure 3 is a perspective view in which an electromagnetic wave attenuator for a mobile communication terminal is attached to an internal side of a mobile phone case; and
Figure 4 is a perspective view in which an electromagnetic wave attenuator for a mobile communication terminal is installed in an antenna of a mobile phone;

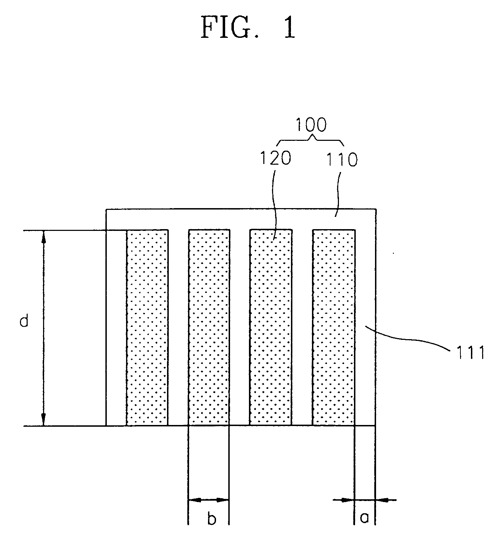

Referring to Figure 1, an electromagnetic wave attenuator 100 according to one example of the present invention includes a corrugated structure conductor 110 having a plurality of ridges 111 between which slots or grooves are formed, and a highly dielectric material 120 having a relative dielectric constant of more than 50 filled in the slots.

The corrugated structure conductor 110 attenuates a high electric field component of an electromagnetic wave propagating a surface of the corrugated structure 110. Here, the number of the ridges 111 is 3 to 8 per wavelength of a center frequency in air. That is, for example, in the case of a personal communication service (PCS) device having a frequency range of 1750-1780MHz, the center frequency is 1765MHz, and the wavelength of the center frequency in air is about 17cm. Thus, there are 3 to 8 ridges every 17cm. However, generally, the greater the number of ridges 111, the greater the attenuation. The number of ridges 111 is preferably within the above range and the entire size of the electromagnetic wave attenuator is reduced by using a highly dielectric material, to be described later. The material of the corrugated structure conductor 110 is preferably formed of metal such as silver (Ag), aluminum (Al), or copper (Cu).

The ratio of the width a of the ridges 111 to the width b of the slots is less that 0.6, and the less, the better. In a preferred embodiment of the present invention, the ratio of the width a of the ridges to the width b of the slots is 0.02. The depth d of the slots is preferably 1/4 wavelength of the center frequency in air.

In this way, the size, width, and depth of the slots and the ridges 111 are important variables. In the above structure, a complicated equation for applying a mode matching theory may be used to interpret attenuation effects, but is not necessary for the purpose of explaining the features of the illustrated examples of the invention.

A highly dielectric material 120 can reduce the size of the attenuator 100. That is, the size of the corrugated structure conductor 110 is inversely proportional to the square root of the relative dielectric constant, and the entire size of the attenuator 100 can be reduced by employing a highly dielectric material 120 having a large relative dielectric constant.

Preferably, the material to be used as the highly dielectric material 120, as described above, is a ceramic compound dielectric material having a relative dielectric constant of at least or more than 50. In a preferred embodiment, the highly dielectric material 120 is SrTiO₃ having a relative dielectric constant between 270 and 290, preferably, 280, or 0.95SrTiO₃ + 0.05ZnTiO₃, having a relative dielectric constant between 240 and 260, preferably 250. Here, the electromagnetic wave attenuator of which the highly dielectric material is SrTiO₃ can be used for an analog or digital cellular phone, a terminal for a global system for mobile communication (GSM), a phone of 900MHz for home use, a CT1 phone, a domestic PCS, or a foreign DCS1800 (Digital Cellular System at 1800HMz). An attenuator for a mobile phone of which the highly dielectric material is 0.95SrTiO₃ + 0.05ZnTiO₃ can be used for a PCS for use in the U.S.A., a digital enhanced cordless telecommunication (DECT), and a PHS for use in Japan. The electromagnetic wave attenuator can also be used for an international mobile Telecommunications - 2000 (IMT-2000) device by changing the number of ridges or the relative dielectric constant of the highly dielectric material.

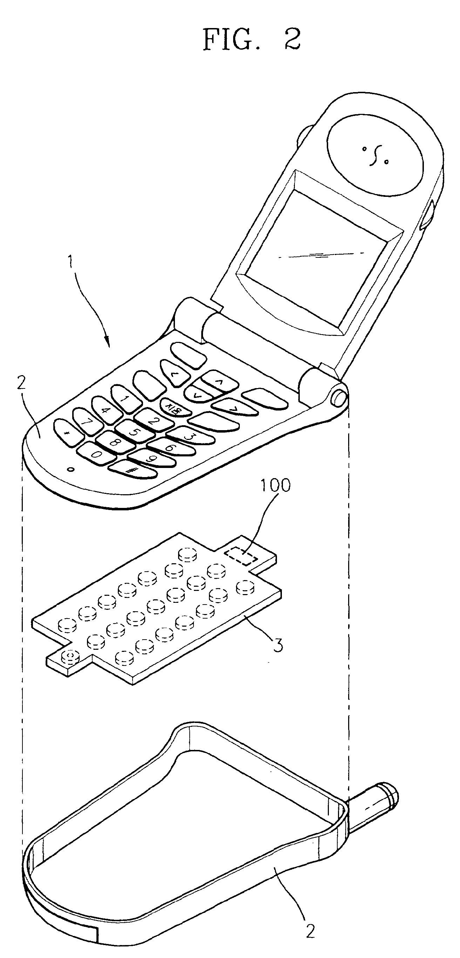

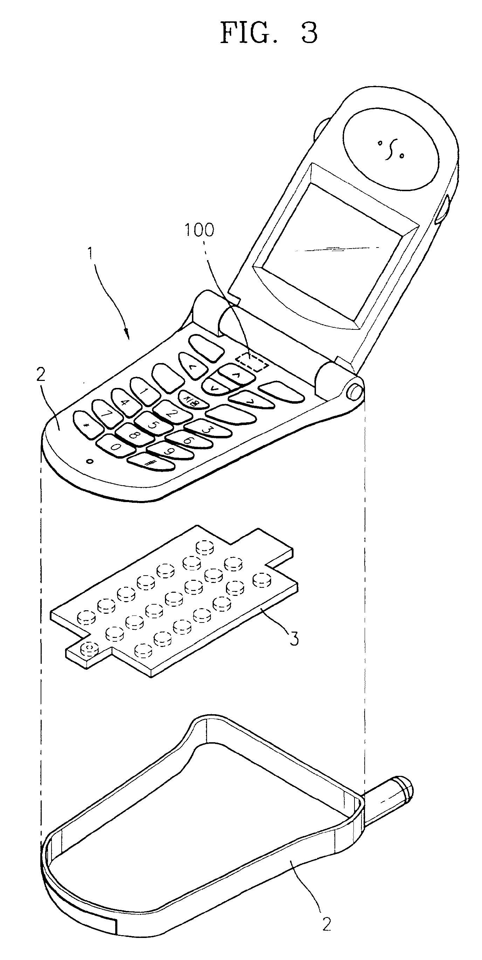

The attenuator 100 may be installed on a printed circuit board (PCB) 3 in a mobile phone 1 as shown in Figure 2 or at an internal side of a mobile phone case 2 as shown in Figure 3. That is, one side of the corrugated structure conductor 110 is soldered with a predetermined conductor which is exposed on the PCB 3, as in Figure 2, or one side of the corrugated structure conductor 110 is installed at the internal side of the mobile phone case 2 by adhesives (not shown), whereby the attenuator 100 is installed in the mobile phone 1.

The attenuator 100 is preferably installed at a position of maximum SAR value by measurement of a specific absorption rate (SAR) of the human body. The SAR value is measured by a specific but widely used measuring method.

The SAR is a unit for indicating the penetration of an electromagnetic wave received by the human body and is obtained by Equation 1.$\text{[Equation 1]} \text{SAR} \text{=} \frac{\text{σ·} {\left|\text{E}\right|}^{\text{2}}}{\text{ρ}} \text{[} \text{W/Kg} \text{]}$

Here σ is the conductivity of the human body, E is the strength of the electric field penetrating into the human body, and ρ is the mass density of the human body. Accordingly, the larger is the electric field penetrating into the human body, the higher is the conductivity of the human body, and the lower is the mass density of the human body, the larger is the SAR value.

Thus, the attenuator 100 is installed at a position of maximum SAR value in the mobile phone 1, whereby the electromagnetic wave transmitted into the human body or the brain can be effectively intercepted.

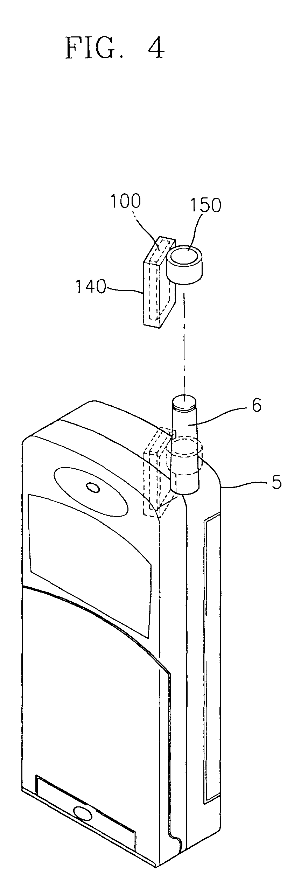

As shown in Figure 4, the attenuator 100 may be disposed in a case 140, and then, the attenuator 100 is fixed to an antenna 6 of a mobile phone 5 by a holder 150 installed at one side of the case 140. The electromagnetic wave attenuator 100 is installed outside of the mobile phone by employing the holder 150,and in this case, the electromagnetic wave attenuator can be used for a conventional mobile phone.

The above-described examples of an electromagnetic wave attenuator for a mobile phone communication terminal can attenuate a strong electromagnetic wave originating from a mobile phone, thereby protecting the human body from such electromagnetic waves and enabling free communication.

In this specification, the verb "comprise" has its normal dictionary meaning, to denote non-exclusive inclusion. That is, use of the word "comprise" (or any of its derivatives) to include one feature or more, does not exclude the possibility of also including further features.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electromagnetic wave attenuator for a mobile communication terminal, the attenuator (100) comprising:
a corrugated structure conductor (110) having a plurality of ridges (111) between which slots are formed; and
a highly dielectric material (120) having a relative dielectric constant of at least 50, disposed in the slots.

2. An electromagnetic wave attenuator according to claim 1, wherein the ratio of the width of the ridges (111) to the width of the slots is less than 0.6.

3. An electromagnetic wave attenuator according to claim 1 or 2, wherein the corrugated structure conductor (110) comprises at least one of silver (Ag), aluminum (Al), and copper (Cu).

4. An electromagnetic wave attenuator according to claim 1, 2 or 3, wherein the highly dielectric material (120) is a ceramic compound dielectric material.

5. An electromagnetic wave attenuator according to claim 4, wherein the highly dielectric material (120) is SrTiO₃ having a relative dielectric constant in the range 270 to 290.

6. An electromagnetic wave attenuator according to claim 4, wherein the highly dielectric material (120) is 0.95SrTiO₃ + 0.05ZnTiO₃ having a relative dielectric constant in the range 240 to 260.

7. A mobile communication terminal provided with an electromagnetic wave attenuator (100) according to any of the preceding claims

8. A mobile communication terminal according to claim 7, wherein the number of ridges (111) is in the range 3 to 8 per wavelength of a centre frequency in air of the operating frequency range of the mobile communication terminal (1).

9. A mobile communication terminal according to claim 7 or 8, wherein the depth of the slots is one-quarter of the wavelength of a centre frequency in air of the operating frequency range of the mobile communication terminal (1).

10. A mobile communication terminal according to claim 7, 8 or 9, wherein one side of the corrugated structure conductor (110) is soldered to a conductor exposed on a printed circuit board (3) of the terminal (1).

11. A mobile communication terminal according to claim 7, 8 or 9, wherein one side of the corrugated structure conductor (110) is secured at an internal side of a case (2) of the terminal (1) by adhesive.

12. A mobile communication terminal according to claim 7, 8 or 9, wherein the attenuator (100) is disposed within a case (140) having a holder (150) at one side of the case (140), by which the case (140) is fixed to an antenna (6) of the terminal (5).

13. A mobile communication terminal according to any of claims 7 to 12, wherein the attenuator (100) is installed at a position of maximum SAR value.
